Europäisches Patentamt

European Patent Office

Office européen des brevets

(11) Veröffentlichungsnummer: **0 172 353**
A2

# (12) EUROPÄISCHE PATENTANMELDUNG

(21) Anmeldenummer: 85107583.8

(22) Anmeldetag: 19.06.85

(51) Int. Cl.⁴: **B 01 J 21/20**
**B 01 J 23/90**

(30) Priorität: 22.08.84 DE 3430887

(43) Veröffentlichungstag der Anmeldung:
26.02.86 Patentblatt 86/9

(84) Benannte Vertragsstaaten:
AT CH FR GB IT LI LU NL SE

(71) Anmelder: DIDIER-WERKE AG
Lessingstrasse 16-18
D-6200 Wiesbaden(DE)

(72) Erfinder: Bühler, Hans-Eugen, Prof.-Dr.
Kastanienweg 3c
D-6240 Königstein 3(DE)

(72) Erfinder: Stein, Hermann
Rossbachhöhe 40
D-6204 Taunusstein 4(DE)

(72) Erfinder: Levkov, Blagoje, Dr.
Rudolf-Vogt-Strasse 41
D-6200 Wiesbaden(DE)

(72) Erfinder: Kainer, Hartmut, Dr.
Sauerbruchstrasse 1a
D-6200 Wiesbaden 12(DE)

(72) Erfinder: Kalfa, Horst, Dr.
Burchterstrasse 2
D-6270 Idstein(DE)

(72) Erfinder: Grimm, Daniel
Hauptstrasse 10
D-6229 Schlangenbad-Bärstadt(DE)

(74) Vertreter: Brückner, Raimund
c/o Didier-Werke AG Lessingstrasse 16-18
D-6200 Wiesbaden(DE)

(54) Verfahren zur Reaktivierung eines Katalysators und Anlage zur Durchführung des Verfahrens.

(57) Bei einem Verfahren zur Reaktivierung eines Katalysators, der zur NO$_x$. Entfernung aus Rauchgasen eingesetzt ist, soll der Katalysator leicht reaktiviert werden können. Hierfür wird der Katalysator beim Nachlassen seiner Aktivität in reduzierender Atmosphäre mit einem Kohlenmonoxidstrom beaufschlagt. Bei einer Anlage zur Durchführung des Verfahrens ist der Katalysator in zwei getrennten Kammern untergebracht. Der Kohlenmonoxidstrom beaufschlagt die beiden Kammern abwechselnd.

EP 0 172 353 A2

D I D I E R - W E R K E  AG
Lessingstraße 16 - 18
6200 Wiesbaden

**0172353**

## Verfahren zur Reaktivierung eines Katalysators
## und Anlage zur Durchführung des Verfahrens

Die Erfindung betrifft ein Verfahren zur Reaktivierung eines Katalysators, der zur $NO_x$-Entfernung aus Rauchgasen eingesetzt ist. Außerdem betrifft die Erfindung eine Anlage zur Durchführung des Verfahrens.

Katalysatoren, die für die $NO_x$-Entfernung aus Rauchgasen, insbesondere staubhaltigen Rauchgasen, eingesetzt werden, verlieren im Laufe des Betriebs ihre Aktivität.

Es wurde gefunden, daß die Aktivität der Katalysatoren zur $NO_x$-Entfernung auf der Anwesenheit von Verbindungen der Übergangselemente in ihrer niedrigsten stabilen Oxidationsstufe beruht. Im Laufe des Betriebs gehen die Verbindungen der Übergangselemente in höhere Oxidationsstufen über. Dies ist der Grund für die Herabsetzung der Aktivität des Katalysators.

Ein weiterer Grund für die Herabsetzung der Aktivität des Katalysators besteht darin, daß sich in den Poren des Katalysators Staub absetzt, so daß der Katalysator verstopft.

Aufgabe der Erfindung ist es, ein Verfahren anzugeben, mit dem sich der Katalysator reaktivieren läßt. Weiter ist es Aufgabe der Erfindung, eine Anlage zur Durchführung eines solchen Verfahrens anzugeben.

-3-

Erfindungsgemäß ist obige Aufgabe dadurch gelöst, daß der Katalysator beim Nachlassen seiner Aktivität in reduzierender Atmosphäre mit einem erhitzten CO-Strom beaufschlagt wird. Dabei gelangt das Kohlenmonoxid in die Poren des Katalysators. Dort zerfällt es in Kohlendioxid und Spaltungskohlenstoff. Dieser bewirkt ein Absprengen äußerer Katalysatorzonen, so daß nach dem Absprengen dieser inaktiven Zonen wieder aktive Katalysatorzonen freiliegen. Die reduzierende Atmosphäre führt zu einer Reduktion der Übergangselemente in die zur $NO_x$-Entfernung aktiven Oxidationsstufen.

Vorzugsweise wird für den Katalysator als Ausgangsmaterial ein Rohstoff, Zwischenprodukt oder Abfallprodukt der Stahlerzeugung verwendet. Ein derartiger Katalysator läßt sich mit dem genannten Verfahren wirkungsvoll reaktivieren. Ein solcher Katalysator hat weiter den Vorteil, daß das Ausgangsmaterial preiswert ist und daß er nach dem Verbrauch umweltfreundlich gelagert oder auch weiterverarbeitet werden kann.

Die Eisenoxide des Katalysators werden bei dem genannten Verfahren reduziert, so daß aktives, fein verteiltes metallisches Eisen katalytisch den Verfall des Kohlenmonoxids im Bereich der Katalysatorporen bewirkt.

Eine Anlage zur Durchführung des Verfahrens zeichnet sich dadurch aus, daß der Katalysator in zwei getrennten Kammern untergebracht ist und daß der Kohlenmonoxidstrom die Kammern beim Nachlassen der Aktivität des Katalysators abwechselnd beaufschlagt.

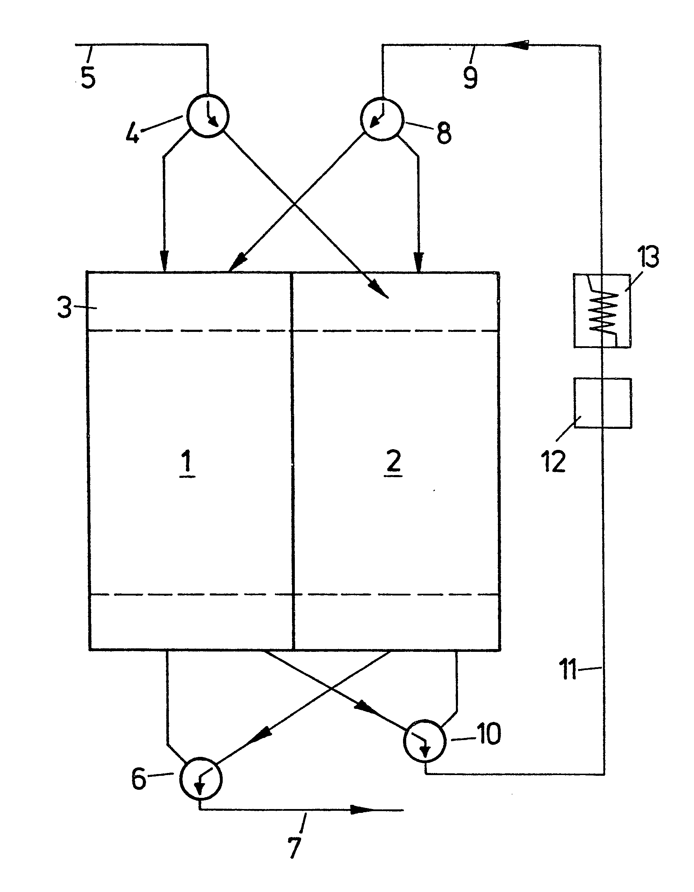

Weitere vorteilhafte Ausgestaltungen der Erfindung ergeben sich aus der folgenden Beschreibung und den Unteransprüchen. Die Zeichnung zeigt eine Anlage zur Durchführung des Verfahrens schematisch.

Als Ausgangsmaterial für den Katalysator eignet sich ein natürlich vorkommendes eisenhaltiges Erz aus den Gruppen Magneteisenstein, Roteisenstein, Sparteisenstein, Chromerz oder Eisenkies. Auch Modifikationen dieser Erze können verwendet werden. Es soll mindestens eine Wirksumme der Übergangselemente mit der niedrigsten stabilen Oxidationsstufe von 3 % vorliegen. Die Wirksumme ist dabei die prozentuale Summe von beispielsweise $Fe^{2+}$, $Cr^{3+}$, $Ti^{4+}$, etc.. Beispielsweise eignen sich die in der folgenden Tabelle mit ihrer hauptsächlichen Zusammensetzung angegebenen Erze.

|  | Sydvaranger-<br>Eisenerzkonzentrat<br>% | Urkut-Manganerz<br>Chromerze<br>% | Raseneisenerz<br>Konraderz<br>% |
|---|---|---|---|
| Fe | 65,51 | 10,00 | 32,22 |
| $Fe^{2+}$ | 21,50 | n.b. | 3,83 |
| Mn | 0,13 | n.b. | 0,24 |
| P | 0,01 | n.b. | 0,36 |
| $SiO_2$ | 7,73 | 5,00 | 14,52 |
| $Al_2O_3$ | 0,55 | 11,80 | 5,30 |
| CaO | 0,10 | 0,58 | 12,52 |
| MgO | 0,68 | 16,50 | 3,83 |
| $Cr_2O_3$ | -- | 49,60 | -- |

Als Ausgangsmaterial für den Katalysator können auch Zwischenprodukte der Roheisenproduktion eingesetzt werden. Es sind dies der Sinter- und Eisenerzpellet, die ebenfalls eine Wirksumme von über 3 % aufweisen. Beispielsweise wurden in einer Sinteranalyse folgende Werte ermittelt:

Fe = 60 %, davon $Fe^{2+}$ = 11,15 %, Mn = 0,21 %, $SiO_2$ = 6,60 %, $Al_2O_3$ = 2,17 %, CaO = 4,75 %, MgO = 1,44 %, P = 0,08 %.

Auch Abfallprodukte der Stahlproduktion können als Ausgangsmaterial für den Katalysator eingesetzt werden. Beispielsweise können die aus der folgenden Tabelle mit ihrer wesentlichen Zusammensetzung angegebenen Schlacken verwendet werden:

|  | LDAC-Schlacke<br>% | Thomasschlacke<br>% | LD-Schlacke<br>% |
|---|---|---|---|
| Fe | 23,60 | 14,02 | 23,40 |
| $Fe^{2+}$ | 14,63 | 6,00 | 9,03 |
| Mn | 3,28 | 2,56 | 3,60 |
| $P_2O_5$ | 5,78 | 15,42 | 3,46 |
| CaO | 40,10 | 48,85 | n.b. |
| MgO | n.b. | 1,14 | n.b. |

Zur Katalysatorherstellung kann auch ein Rotschlamm verwendet werden, wie **0172353** er in der Aluminiumproduktion anfallt. Ein solcher Rotschlamm hat beispielsweise folgende Zusammensetzung:

| | |
|---|---|
| $SiO_2$ | 11,10 % |
| $Al_2O_3$ | 33,50 % |
| $TiO_2$ | 14,40 % |
| $Fe_2O_3$ | 37,50 % |
| CaO | 1,50 % |
| $ZrO_2$ | 0,46 %. |

Daruberhinaus kann als Ausgangsmaterial für den Katalysator auch ein Recyclingprodukt verwendet werden, das eine ausreichende Wirksumme an entsprechenden Übergangselementen aufweist.

Der Katalysator wird in zwei Kammern 1 und 2 eines Doppelkammerreaktors 3 verteilt. Über ein Umschaltventil 4 ist eine Rauchgas-Zufuhrleitung 5 im Wechsel mit jeder der Kammern 1 und 2 verbindbar. Entsprechend sind beide Kammern 1 und 2 über ein Umschaltventil 6 mit einer Rauchgas-Abführleitung 7 verbunden.

An die beiden Kammern 1 und 2 ist über ein weiteres Umschaltventil 8 eine Kohlenmonoxidleitung 9 angeschlossen. Über ein weiteres Umschaltventil 10 sind die beiden Kammern 1 und 2 mit einer Ableitung 11 verbunden. Die Ableitung 11 ist über einen $CO_2$-Wascher 12 und ein Heizaggregat 13 an die Leitung 9 angeschlossen. Die Umschaltventile 4, 6, 8 und 10 sind so schaltbar, daß die eine Kammer 1 oder 2 an die Leitungen 5 und 7 und die andere Kammer 2 oder 1 an die Leitungen 9 und 11 angeschlossen ist.

Im Beispielsfall wird der Kammer 2 $NO_x$-haltiges, $O_2$-haltiges und staubhaltiges Rauchgas zugeführt. Der Katalysator der Kammer 2 entfernt $NO_x$ aus dem Rauchgas, so daß in seinem $NO_x$-Gehalt gemindertes Rauchgas die Leitung 7 verlaßt.

0172353

Im Beispielsfall wird der Kammer 1 über die Leitung 9 auf etwa 500 °C erhitztes Kohlenmonoxid zugefuhrt. Dieses reaktiviert den Katalysator der Kammer 1. Dabei platzen inaktive Katalysatorzonen in der reduzierenden Atmosphare der Kammer 1 ab. Es hat sich gezeigt, daß für eine Reaktivierung des Katalysators eine Reaktionszeit von 4 bis 8 Stunden ausreicht. Diese Zeit hangt von der Struktur und der Zusammensetzung des jeweiligen Katalysator ab. Bei der Reaktivierung entsteht Kohlendioxid, das zusammen mit dem verbleibenden Kohlenmonoxid über die Leitung 11 im Kreislauf abgezogen wird. Das Kohlendioxid wird im Wascher 12 ausgewaschen. Anschließend wird das Kohlenmonoxid wieder auf 500 °C erhitzt. Es wird erneut der Kammer 1 zugeführt. Wenn der Katalysator der Kammer 1 reaktiviert ist, wird sie durch Abschalten des Kohlenmonoxidstromes in Wartestellung gesetzt. Nach einer Deaktivierung des Katalysators der Kammer 2 werden die Leitungen 5 und 7 auf die Kammer 1 geschaltet und die Kammer 2 wird mit den Leitungen 9 und 11 verbunden. Jetzt erfolgt die Entfernung des Stickstoffes aus dem Rauchgas in der Kammer 1. Der Katalysator der Kammer 2 wird reaktiviert.

D I D I E R - W E R K E  AG
Lessingstraße 16 - 18
6200 Wiesbaden

Verfahren zur Reaktivierung eines Katalysators
und Anlage zur Durchführung des Verfahrens

P a t e n t a n s p r ü c h e :

1. Verfahren zur Reaktivierung eines Katalysators, der zur $NO_x$-Entfernung
   aus Rauchgasen eingesetzt ist, dadurch gekennzeichnet, daß der Katalysator beim Nachlassen seiner Aktivität in reduzierender Atmosphare mit
   einem erhitzten Kohlenmonoxidstrom beaufschlagt wird.

2. Verfahren nach Anspruch 1, dadurch gekennzeichnet, daß für den Katalysator als Ausgangsmaterial ein Rohstoff, Zwischenprodukt oder Abfallprodukt der Stahlerzeugung verwendet wird.

3. Verfahren nach Anspruch 2, dadurch gekennzeichnet, daß mindestens eine
   Wirksumme der Übergangselemente mit der niedrigsten stabilen Oxidationsstufe von 3 % vorliegt.

4. Verfahren nach Anspruch 2 und 3, dadurch gekennzeichnet, daß die
   Wirksumme die prozentuale Summe von beispielsweise $Fe^{2+}$, $Cr^{3+}$, $Ti^{4+}$,
   etc. ist.

5. Verfahren nach den vorhergehenden Ansprüchen, dadurch gekennzeichnet,
   daß der Kohlenmoxidstrom auf etwa 500 °C erhitzt wird.

6. Anlage zur Durchführung des Verfahrens nach einem der vorhergehenden
   Ansprüche, dadurch gekennzeichnet, daß der Katalysator in zwei getrennte
   Kammern (1, 2) untergebracht ist und daß der Kohlenmonoxidstrom die Kammern (1, 2) abwechselnd beaufschlagt.

-2-